# EUROPEAN PATENT APPLICATION

(11) **EP 2 832 806 A1**
(43) Date of publication of application: **04.02.2015**
(21) Application number: 13767540.1
(22) Date of filing: 08.03.2013
(51) Int. Cl.: C09D 11/18

(54) **WATER-BASED INK COMPOSITION FOR BALLPOINT PEN**

(30) Priority: 27.03.2012 JP 2012071671
(71) Applicant: Mitsubishi Pencil Company, Limited, Tokyo 140-8537 (JP)
(72) Inventor: ITOU, Hiroyuki, Yokohama-shi Kanagawa 221-8550 (JP); OGURA, Kousuke, Yokohama-shi Kanagawa 221-8550 (JP); MIYAZAKI, Yuichi, Yokohama-shi Kanagawa 221-8550 (JP); KAWAKITA, Yoshihiro, Fujioka-shi Gunma 375-8501 (JP)
(74) Representative: Cohausz & Florack
(86) International application number: PCT/JP2013/056478
(87) International publication number: WO 2013/146192

(57) **Abstract**

To provide an ink composition for a water-based ballpoint pen, having properties such as excellent writing stability in which writing failure such as starving does not occur.

Disclosed is an ink composition for a water-based ballpoint pen, including an aqueous phase, and an oil phase contained in the aqueous phase in a state of an oil-in-water type emulsion, wherein
the oil phase, or the oil phase and the aqueous phase contains a colorant, and
the oil phase contains, in components composing the oil phase, a fatty acid having 6 to 22 carbon atoms.

## Description

### Technical Field

The present invention relates to an ink composition for a water-based ballpoint pen, and specifically to an ink composition for a water-based ballpoint pen in which an oil phase is contained in an aqueous phase in a state of an oil-in-water type emulsion.

### Background Art

A water-based ballpoint pen features light writing feel, while scratching feel may be often perceived. A water-soluble dye used as a colorant has advantages such as high tinting strength and high degree of freedom of toning, but has low weatherability and has a problem that a drawn line is likely to undergo bleeding when water adheres to the drawn line.

An oil-based ballpoint pen has an advantage that no scratching feel is perceived during writing and causes less bleeding of a drawn line, but heavy writing feel may be often perceived. An oil-soluble dye used as a colorant has water resistance and thus no bleeding occurs when water adheres to the drawn line, as mentioned above.

In recent days, there has also been developed an oil-based ballpoint pen in which writing feel has been improved by decreasing viscosity of an oil-based ink. However, since the flow-out amount during writing increases in the oil-based ink having low viscosity, drawn line-drying property deteriorates, and thus causing print through of an ink to the rear surface of a paper, and dropping.

JP 2004-115611 A discloses an oil-based ballpoint pen ink having low viscosity in which a W/O type organic solvent prepared by mixing an organic solvent with water is used. However, since this ink has a problem with storage stability. The ink is mostly composed of an organic solvent, and thus print through may occur when the flow-out amount during writing is increased.

JP 2007-327003 A discloses a W/O type emulsion ink composition in which a pigment is added in an aqueous phase component in advance, followed by mixing with an oil-based component, whereby, water droplets composed of the aqueous phase component containing the pigment dispersed therein are dispersed in the oil-based component. The publication discloses a ballpoint pen ink in which feel of writing has been improved by using this ink composition. However, the ballpoint pen ink lacks in stability of the ink, that is, water droplets are localized as a result of aggregation when stored over the long period. Because of a large amount of an oil-based component in the ink composition, print through and drawn line-drying property significantly may become inferior when the flow-out amount during writing is increased, like the water-based ballpoint pen.

The specification of JP 2009-292872 A by the present applicant discloses an ink composition for a water-based ballpoint pen, which has merits of a water-based ballpoint pen and an oil-based ballpoint pen, and also has ink properties in an oil-in-water type emulsion (O/W emulsion) form. The specification of JP 2010-275391 A discloses an ink composition for a water-based ballpoint pen, including an aqueous phase composed of pigment dispersion, and an oil phase, which contains an oil-based solution prepared by dissolving a dye in an organic solvent, contained in the aqueous phase in a state of an oil-in-water type emulsion. Such oil-in-water type emulsion ink composition for a water-based ballpoint pen is a new type of an ink composition for a water-based ballpoint pen and has excellent performance capable of achieving very smooth writing feel. Meanwhile, it has been found that there is a problem that a precipitated aggregate tends to be formed at a pen tip, thus causing writing failure before using up the ink.

### Citation List

### Patent Literature

Patent Literature 1: JP 2004-115611 A
Patent Literature 2: JP 2007-327003 A
Patent Literature 3: JP 2009-292872 A
Patent Literature 4: JP 2010-275391 A

### Summary of Invention

### Technical Problem

The formation of the above-mentioned precipitated aggregate at the pen tip is a phenomenon which is not observed in a conventional ballpoint pen using a water-based ink, and is a problem peculiar to a ballpoint pen using an oil-in-water type emulsion type ink for a water-based ballpoint pen. The ball diameter of the pen tip of the ballpoint pen gradually decreases, for example, 0.7 mm (medium), 0.5 mm (fine) and 0.38 mm (extra fine), and a ballpoint pen capable of writing finely has recently been favored. As the ball diameter becomes smaller, a gap formed by a ball holder and a ball becomes narrower, and thus an ink flow path is clogged to cause writing failure even if a small amount of the aggregate or precipitate is formed. It is a significantly difficult problem to solve writing failure, especially in the case of the ball diameter of 0.38 mm (extra fine).

### [Solution to Problem]

The present inventors have intensively studied this problem and found that a precipitated aggregate at a pen tip is derived from a solid substance in an ink, especially a mixture such as a dye or a resin existing in an oil phase, and found that the addition of a fatty acid having carbon atoms of 6 or more and 22 or less in the oil phase enables the solution of a problem with writing failure, thus making it possible to provide satisfactory writing stability (final writing performance), leading to the completion of the present invention.

The present invention is as described in detail below.
(1) An ink composition for a water-based ballpoint pen, including an aqueous phase, and an oil phase contained in the aqueous phase in a state of an oil-in-water type emulsion, wherein
   the oil phase, or the oil phase and the aqueous phase contains a colorant, and
   the oil phase contains, in components composing the oil phase, a fatty acid having 6 to 22 carbon atoms.
(2) The ink composition for a water-based ballpoint pen according to (1), wherein the fatty acid has a melting point of lower than 30°C.
(3) The ink composition for a water-based ballpoint pen according to (1) or (2), wherein the oil phase contains at least an organic solvent having one or more aromatic rings in the molecular structure.
(4) The ink composition for a water-based ballpoint pen according to any one of (1) to (3), further comprising an emulsifier having one or more aromatic rings in the molecular structure.

### Advantageous Effects of Invention

An oil-in-water type emulsion type ink for a water-based ballpoint pen of the present invention can provide satisfactory writing stability (final writing performance), and also can provide a water-based ballpoint pen in which ink viscosity does not increase more than necessary even if the above fatty acid is added, and starving does not occur during flows out of the ink.

### Description of Embodiments

The present invention is directed to an ink composition for a water-based ballpoint pen, including an aqueous phase, and an oil phase contained in the aqueous phase in a state of an oil-in-water type emulsion, wherein
the oil phase, or the oil phase and the aqueous phase contains a colorant, and
the oil phase contains, in components composing the oil phase, a fatty acid having 6 to 22 carbon atoms.

Components of the ink composition of the present invention will be described in detail below.

The fatty acid used in the ink composition of the present invention is a fatty acid having 6 to 22 carbon atoms. When the number of carbon atoms is less than 6, sufficient writing stability (final writing performance) is not provided. As a result of a test, a fatty acid having more than 22 carbon atoms also did not provide sufficient writing stability (final writing performance). It is considered that a melting point of these fatty acids exerts an influence on writing stability. Among fatty acids having 6 to 22 carbon atoms, a fatty acid having a melting point of lower than 30°C provides particularly satisfactory writing stability. It is considered that solubility of a fatty acid in an aromatic organic solvent is also involved in writing stability (final writing performance). It is possible to use, as the fatty acid usable in the present invention, any fatty acids such as linear or branched saturated or unsaturated fatty acids as long as the number of carbon atoms is within a range of 6 to 22.

Examples of the fatty acid usable in the present invention include caproic acid, enanthic acid, carpylic acid, capric acid, stearic acid, behenic acid, isostearic acid, caproleic acid, palmitic acid, oleic acid, linoleic acid, linolenic acid, eicosatetraenoic acid, docosapentaenoic acid, eicosapentaenoic acid, docosahexaenoic acid, erucic acid and the like. Preferred fatty acids are caproic acid, enanthic acid, carpylic acid, capric acid, lauric acid, stearic acid, isostearic acid, palmitic acid, oleic acid, linoleic acid, linolenic acid, eicosatetraenoic acid, docosapentaenoic acid, eicosapentaenoic acid, docosahexaenoic acid, erucic acid and the like. Particularly preferred fatty acids are caproic acid, enanthic acid, carpylic acid, isostearic acid, oleic acid, linoleic acid, linolenic acid, eicosatetraenoic acid, docosapentaenoic acid, eicosapentaenoic acid, docosahexaenoic acid and the like.

The reason why writing stability (final writing performance) is improved by adding a fatty acid in an oil-in-water type emulsion ink is not known, but is considered that the fatty acid exerts the function of suppressing the formation of a precipitated aggregate and redissolving the thus formed precipitated aggregate. The reason why an aggregated precipitate is formed at a pen tip in a ballpoint pen using an oil-in-water type emulsion ink is considered that the substance dissolved in an oil phase does not precipitate in an ink refill, but precipitates and aggregates at a pen tip. A dye, a resin and the like are dissolved in an oil phase of an oil-in-water type emulsion ink, and it is considered that the oil-in-water type emulsion ink is stirred in the case of passing through a gap between a ball and a ball holder at a pen tip, followed by phase inversion from a O/W emulsion into a W/O emulsion in the narrow space, and thus the dissolved substance is likely to be precipitated from the oil phase converted into a continuous layer. It is considered that the addition of a fatty acid in the oil phase may suppress the formation of a precipitate in the above-mentioned state where phase inversion has been performed, thus redissolving the formed precipitated aggregate.

The content of such fatty acid used in the oil-in-water type emulsion ink is controlled to 1% by mass or more and less than 70% by mass, and preferably 5 to 70% by mass, in the components composing the oil phase of the ink. It is not preferred that the content of such fatty acid is less than 1% by mass since sufficient effect may not be exerted, and that the content of 70% by mass or more may cause deterioration of stability of the respective components composing the oil phase.

The oil phase of the ink composition of the present invention is composed of an oil-based solution in which at least a dye or pigment as a colorant is dissolved or dispersed in an organic solvent. It is possible to use, as the solvent of the oil-based solution, an aromatic organic solvent and an aliphatic organic solvent. The content of the aromatic organic solvent is preferably 20% by mass or more in the solvent composing the oil phase (liquid component).

The aromatic organic solvent usable as the solvent of the oil-based solution is more preferably a solvent, which has one or more aromatic rings in the molecule and also has solubility in water of 5 g/100 g or less at 25°C, considering that the solvent can dissolve a dye and is incompatible with water, and also the thus formed emulsion has satisfactory storage stability and high safety. When solubility is more than 5 g/100 g, the obtained emulsion may become unstable to cause phase separation with the lapse of time.

The aromatic organic solvent usable in an oil-based solution of the present invention is preferably a comparatively low volatile solvent. Usable solvent can be one type of a solvent selected from the following examples of the solvent, or plural types of solvents.

Examples of the solvent usable in the oil-based solution of the present invention include benzyl alcohol, ethylene glycol monophenyl ether, ethylene glycol monobenzyl ether, propylene glycol monophenyl ether, diethylene glycol monophenyl ether, alkylsulfonic acid phenyl ester, butyl phthalate, ethylhexyl phthalate, tridecyl phthalate, ethylhexyl trimellitate, diethylene glycol dibenzoate, dipropylene glycol dibenzoate, xylene, toluene and the like. Among these solvents, particularly preferred solvents are ethylene glycol monobenzyl ether, propylene glycol monophenyl ether, alkylsulfonic acid phenyl ester, ethylhexyl phthalate, tridecyl phthalate, ethylhexyl trimellitate, diethylene glycol dibenzoate, dipropylene glycol dibenzoate, and a liquid xylene resin, each having a solubility in water at 25°C of 1 g/100 g or less. Among these solvents, most preferred solvents are an alkylsulfonic acid phenyl ester, ethylhexyl trimellitate, diethylene glycol dibenzoate, dipropylene glycol dibenzoate, and a liquid xylene resin, each having a solubility in water at 25°C of 0.1 g/100 g or less.

From the viewpoint of safety of an operation of dissolving a dye and the viewpoint of suppression of unstabilization due to an increase in inner pressure of an emulsion at high temperature, a solvent having a boiling point of 200°C or higher is preferable. Examples of preferred solvent include benzyl alcohol, ethylene glycol monophenyl ether, ethylene glycol monobenzyl ether, propylene glycol monophenyl ether, diethylene glycol monophenyl ether, alkylsulfonic acid phenyl ester, butyl phthalate, ethylhexyl phthalate, tridecyl phthalate, ethylhexyl trimellitate, diethylene glycol dibenzoate, dipropylene glycol dibenzoate and the like.

The oil-based solution of the present invention can contain, in addition to the above aromatic organic solvent, any co-solvent. For example, a solvent selected from alcohols, polyhydric alcohols, glycol ethers, hydrocarbons, and esters can be used. However, a co-solvent, which is infinitely compatible with water, should not be used in a large amount since it causes diffusion in an aqueous phase and aggregation of oil droplets. The amount of the co-solvent may be within 10% by mass on a mass basis of the oil-based solution.

Alcohols are preferably aliphatic alcohols having 2 or more carbon atoms, and examples thereof include various higher alcohols such as ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methylamyl alcohol, 2-ethylbutanol, n-heptanol, 2-heptanol, 3-heptanol, n-octanol, 2-octanol, 2-ethylhexanol, 3,5,5-trimethylhexanol, nonanol, n-decanol, undecanol, n-decanol, trimethylnonyl alcohol, tetradecanol, heptadecanol, cyclohexanol, and 2-methylcyclohexanol.

Polyhydric alcohols are preferably polyhydric alcohols having two or more carbon atoms and two or more hydroxyl groups in the molecule, and examples thereof include ethylene glycol, diethylene glycol, 3-methyl-1,3-butanediol, triethylene glycol, dipropylene glycol, 1,3-propanediol, 1,3-butanediol, 1,5-pentanediol, hexylene glycol, octylene glycol and the like.

Examples of glycol ethers include methyl isopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethyl butyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1--butanol, 3-methoxy-1-butanol, propylene glycol monomethyl ether, propylene glycol monoethyl ether, propylene glycol monopropyl ether, propylene glycol monobutyl ether, propylene glycol tertiary butyl ether dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, tetrapropylene glycol monobutyl ether and the like.

Examples of hydrocarbons include linear hydrocarbons such as hexane, isohexane, heptane, octane, nonane, and decane; and cyclic hydrocarbons such as cyclohexane, methylcyclohexane, and ethylcyclohexane.

Examples of a co-solvent of esters include various esters such as propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, isomethyl butyrate, isoethyl butyrate, isopropyl butyrate, methyl valerate, ethyl valerate, propyl valerate, isomethyl valerate, isoethyl valerate, isopropyl valerate, methyl trimethylacetate, trimethyl ethyl acetate, trimethyl propyl acetate, methyl caproate, ethyl caproate, propyl caproate, methyl caprylate, ethyl caprylate, propyl caprylate, methyl laurate, ethyl laurate, methyl oleate, ethyl oleate, caprylic acid triglyceride, citric acid tributyl acetate, octyl oxystearate, propylene glycol monoricinoleate, 2-hydroxyisomethyl butyrate, and 3-methoxybutyl acetate.

Diether or diester can be used as a co-solvent having no hydroxyl group in the molecule, and specific examples thereof include ethylene glycol diethyl ether, ethylene glycol dibutyl ether, diethylene glycol diethyl ether, diethylene glycol dibutyl ether, diethylene glycol dimethyl ether, dipropylene glycol dimethyl ether and the like.

As long as the dye used in the oil phase of the ink composition of the present invention is soluble in the above-mentioned solvent, any dye used in a common oil-based ink composition can be used. It is possible to use, as the oil-soluble dye of the present invention, any one from among direct dyes, acid dyes, basic dyes, mordant/acidic mordant dyes, spirit soluble dyes, azoic dyes, sulfur/sulfur vat dyes, vat dyes, disperse dyes, oil-soluble dyes, food dyes, metal complex dyes, salt-forming dyes, and dyes prepared by dyeing a resin with a dye, which are used in a conventional dye ink composition. Among these dyes, alcohol-soluble dyes soluble in an organic solvent, such as salt-forming dyes, and oil-soluble dyes are preferable in view of solubility and stability of an emulsion. Dyes are particularly preferably oil-soluble dyes.

The amount of the lower limit of the dye is preferably 0.3% or more on a mass basis of the entire amount of the ink composition. The amount of less than 0.3% may cause insufficient tinting strength. The amount of the upper limit of the dye is preferably 70% or less on a mass basis of the entire amount of the ink composition. The amount of more than 70% may cause difficulty in dissolution of a dye, and thus the obtained ink composition is unsuited for use as an ink composition for a ballpoint pen. Particularly preferably, the amount of the dye is within a range of 1 to 6% on a mass basis of the ink composition and is also within a range of 10 to 60% on a mass basis of the oil-based solution.

Examples of salt-forming dyes usable in the present invention include VALIFAST COLOR (registered trademark, manufactured by Orient Chemical Industries Co., Ltd.), and AIZEN SPIRON dye and AIZEN SOT dye (registered trademark, manufactured by HODOGAYA CHEMICAL CO., LTD.).

Examples of dyes prepared by dyeing a resin with a dye include keiko-Colot MPI-500 Series, keiko-Colot MPI-500C Series and keiko-Colot NKS-1000 Series (registered trademark, manufactured by Nippon Keiko Kagaku Co., Ltd.).

It is possible to use, as the colorant in the oil phase, a small amount of a pigment in combination with a dye as long as stability of an emulsion can be maintained. When using the pigment, the amount of the pigment is preferably 10% or less on a mass basis of the oil-based solution. The amount more than 10% may cause a failure in stability of an emulsion.

Examples of pigments usable in combination with dyes in an oil phase include inorganic pigments such as carbon black and titanium oxide; various organic pigments such as phthalocyanine-based pigments, azo-based pigments, diketopyrrolopyrrole-based pigments, anthraquinone-based pigments, perylene-based pigments, isoindolinone-based pigments, quinacridone-based pigments and the like.

A resin can be used in the oil-based solution for preparing the ink composition of the present invention so as to adjust the viscosity. The viscosity of the oil-based solution is preferably from 500 to 1,000,000 mPa·s at 25°C and a shear rate of 3.83/second in a state where no emulsifier is contained. The viscosity of less than 500 mPa·s may cause scratching feel, and thus it is hard to exhibit performance as an oil-based ink by preparing an oil-in-water type. It is not also preferred for stability of an emulsion. The viscosity of more than 1,000,000 mPa·s may cause unsmooth feel of writing, and the obtained ink composition is not preferable as an ink composition of a ballpoint pen. The viscosity is particularly preferably within a range of 3,000 to 500,000 mPa·s at 25°C and a shear rate of 3.83/second.

Specific examples of resins usable in the ink composition of the present invention include natural and synthetic resins such as a ketone resin, a sulfoamide resin, a maleic acid resin, a terpene resin, a terpenephenol resin, an ester gum, a xylene resin, an alkyd resin, a phenol resin, rosin, polyvinylpyrrolidone, polyvinyl butyral, polyvinyl alcohol, an acrylic resin, a melamine-based resin, and a cellulose-based resin, and derivatives of these resins. These resins can be used alone, or two or more kinds of resins can be used in combination.

The amount of the colorant and other additives in the oil-based solution is preferably from 3 to 70% on a mass basis of the entire oil-based solution in terms of the solid content. The solid content of less than 3% may fail to impart sufficient viscosity to the ink. The content of more than 70% may cause difficulty in dissolution when using a dye, and thus the obtained ink composition is unsuited for use as an ink composition for a ballpoint pen. The solid content is particularly preferably within a range of 10% to 60%.

The aqueous phase of the ink composition of the present invention can be composed of a dispersion or aqueous solution in which at least a colorant has been dispersed or dissolved. In an aspect, the aqueous phase can be composed of a pigment dispersion in which a pigment has been dispersed in water. In another aspect, the aqueous phase can be composed of an aqueous solution in which a water-soluble dye has been dissolved in water in place of a pigment. A pigment and a dye can also be used in combination as the colorant of the aqueous phase. In another aspect, the aqueous phase of the present invention can also contain no colorant.

When using a pigment as the colorant of the aqueous phase, for example, this pigment dispersion can be a pigment dispersion using ion-exchange water or purified water. It is possible to use, as the pigment, inorganic pigments such as carbon black and titanium oxide; and various organic pigments such as phthalocyanine-based pigments, azo-based pigments, diketopyrrolopyrrole-based pigments, anthraquinone-based pigments, perylene-based pigments, isoindolinone-based pigments, and quinacridone-based pigments.

Examples of pigments include C.I. Pigment Blacks 1 and 7; C.I. Pigment Yellows 1, 2, 3, 12, 13, 14, 16, 17, 20, 24, 34, 35, 42, 53, 55, 65, 73, 74, 75, 81, 83, 86, 93, 94, 95, 97, 98, 99, 100, 101, 104, 108, 109, 110, 114, 117, 120, 125, 128, 129, 137, 138, 139, 147, 148, 150, 151, 153, 154, 155, 166, 167, 168, 173C, 174, 180, and 185; C.I. Pigment Reds 1, 2, 3, 5, 7, 8, 9, 10, 12, 16, 17, 19, 22, 38, 41, 43, 48, 48:2, 48:3, 49, 50:1, 52, 53, 53:1, 57, 57:1, 58:2, 60, 63:1, 63:2, 64:1,86,88,90, 9, 112, 122, 123, 127, 146, 149, 166, 168, 170, 175, 176, 177, 179, 180, 181, 184, 185, 189, 190, 192, 194, 198, 202, 206, 207, 209, 215, 216, 217, 220, 223, 224, 226, 227, 228, 238, 240, 245, 254, and 225; C.I. Pigment Blues 1, 2, 3, 15:1, 15:2, 15:3, 15:4, 15:6, 16, 17, 22, 25, 60, 64, and 66; C.I. Pigment Oranges 5, 10, 13, 16, 36, 40, 43, 48, 49, 51, 55, 59, 61, and 71; C.I. Pigment Violets 1, 3, 5:1, 16, 19, 23, 29, 30, 31, 33, 36, 37, 38, 40, 42, and 50; C.I. Pigment Greens 7, 10, and 36; and C.I. Pigment Browns 23, 25, and 26.

The color of a colorant to be dissolved or dispersed in an oil phase may be the same as or different from a color of a colorant to be dissolved in or decomposed into an oil phase. When using a color having the same color, the color of the ink becomes vivid by a dye having the same color, and also the color density is improved. When using a dye having a different color, the color of the obtained ink has a variety of tonings with high degree of freedom.

Examples of the dispersing agent for obtaining pigment dispersion include, but are no limited to, various commercially available products. In view of affinity with the co-existing oil-in-water type emulsion and storage stability, a polymer resin-based dispersing agent is preferable, and a material different from that used in an emulsifier, which is used for formation of an emulsion, is preferable. For example, a styrene acrylic resin or a polyoxyethylene-based dispersing agent can be used. The dispersing agent is particularly preferably a styrene acrylic resin which is a polymer.

When using a pigment, the amount of the pigment to be used is from 3 to 15%, and preferably from 5 to 10%, based on the entire mass of the ink composition, including the content of the oil phase if the pigment is contained in the oil phase. When the amount of the pigment is 3% or less, light resistance of a colorant becomes inferior, and a drawn line is inferior in density. In contrast, it is not preferred that the amount of the pigment of 15% or more since dispersion stability of the pigment becomes inferior. The amount of the dispersing agent to be used preferably falls within a range of 20 to 100% based on the total mass of the pigment of the pigment dispersion.

It is possible to use, as the method for dispersing a pigment in an aqueous phase, a method in which the respective components are uniformly mixed by a mixing stirrer, or a method using a disperser such as a ball mill, a beads mill, a roll mill, a homomixer, a disper, an ultrasonic disperser, or a high pressure homogenizer.

The aqueous phase of the ink composition of the present invention can contain, in addition to a pigment, a dye. Usable dye can be selected from water-soluble dyes such as direct dyes, acid dyes, basic dyes and the like as long as the dye does not make the system of the oil-in-water type emulsion unstable.

The aqueous phase can contain additives for the purpose of preventing an ink from freezing at low temperature and preventing an ink from drying at a pen tip, and specific examples thereof include glycols such as ethylene glycol, diethylene glycol, triethylene glycol, propylene glycol, polyethylene glycol, 1,3-butylene glycol, thiodiethylene glycol, and glycerol; and ethers such as ethylene glycol monomethyl ether and diethylene glycol monomethyl ether. These additives can be used alone or in combination. The use amount of the additive is from 0 to 50%, and preferably from 0 to 30%, on a mass basis of the aqueous phase. The addition of 50% or more of the additive may cause stability problem in the obtained emulsion.

The aqueous phase contains an emulsifier so as to form a stable emulsion by mixing with the above-mentioned oil-based solution. The emulsifier, which is mixed with a solvent of the oil-based solution usable in the present invention to form a stable emulsion over the long period, is an emulsifier having one or more aromatic rings in the molecular structure. It is considered that the emulsifier having one or more aromatic rings in the molecular structure forms a stable emulsion over the long period since the aromatic ring as a lipophilic group exhibits high affinity to a dye solution of an oil phase.

The aromatic emulsifier usable in the ink composition of the present invention is not particularly limited as long as it has one or more aromatic rings. It is possible for the emulsifier to usually properties thereof by the addition mole number of ethylene oxide (EO). In connection with a solvent used in the oil-based solution, the emulsifier is preferably an emulsifier in which the addition mole number of ethylene oxide is 40 mol or more. The reason is that aggregation of particles is suppressed by a long-chain ethylene oxide.

It is possible to use an emulsifier in which the above-mentioned addition mole number of ethylene oxide is 40 mol or more, in combination with an emulsifier exhibiting strong orientation to an oil phase in which the addition mole number of ethylene oxide is from 3 to 15 mol. The reason is considered that use of an emulsifier exhibiting strong orientation to an oil phase in combination with an emulsifier exhibiting strong orientation to an aqueous phase enables an increase in micelle concentration at an interface, leading to an increase in stability of an emulsion.

Regarding a hydrophile-lipophile balance value (HLB value), it is preferred to use one or more type of emulsifiers having at least an HLB value of 15 or more when using a nonionic surfactant as an emulsifier. The reason is that the emulsifier is excessively incorporated into the oil phase side when the HLB value is low, even in the case of large addition mole number of ethylene oxide.

Examples of the emulsifier containing 40 mol or more of ethylene oxide include polycyclic phenyl type nonionic surfactants containing 40 mol or more of ethylene oxide added therein, such as polyoxyethylene distyrenated phenyl ether, polyoxyethylene monostyrenated phenyl ether, and polyoxyethylene cumyl phenyl ether; and ionic surfactants such as sulfates thereof. The addition mole number of ethylene oxide is preferably 40 mol or more and 200 mol or less. In the case of an emulsifier containing 200 mol or more of ethylene oxide added therein, viscosity may significantly increase, and thus being unsuitable for use.

Examples of the emulsifier in which the addition mole number of ethylene oxide is from 3 to 15 include polycyclic phenyl type nonionic surfactants containing 3 to 15 mol of ethylene oxide chain added therein, such as polyoxyethylene distyrenated phenyl ether, polyoxyethylene monostyrenated phenyl ether, and polyoxyethylene cumyl phenyl ether; ionic surfactants such as sulfates thereof; and alkylphenol type nonionic surfactants such as polyoxyethylene alkyl phenyl ether.

In addition to the emulsifier having aromatic rings in the molecule, any emulsifier having the other structure can be added. Examples thereof include linear hydrocarbon type nonionic surfactants such as polyoxyethylene hardened castor oil and polyoxyethylene alkyl (C10-C18) ester; and sorbitan derivatives. The amount of the emulsifier is preferably from 5 to 150%, and most preferably from 10 to 100%, on a mass basis of the oil-based solution.

The aqueous phase can contain, in addition to emulsifiers, various additives used commonly in a water-based ballpoint pen, for example, rust-preventive agents, antiseptics, pH adjustors, lubricants, humectants, and thickeners such as resins and natural polysaccharides.

The proportion of the oil phase component is from 1 to 20%, and preferably from 5 to 15%, on a mass basis in the oil-in-water type ink composition for a water-based ballpoint pen of the present invention. When the proportion of the oil phase component is less than 1%, neither improvement in color density nor satisfactory writing performance is obtained, and thus the obtained ballpoint pen is still not different from a conventional water-based ballpoint pen. In contrast, when the proportion of the oil phase component is more than 20%, an emulsion may be unstabilized by an interaction with a pigment dispersion. Since the oil content increases, an adverse influence may be exerted on drawn line-drying property.

The average particle diameter of the emulsion is preferably 200 nm or less, and more preferably 150 nm or less. The average particle diameter is adjusted to 200 nm or less so as to suppress sedimentation of particles or aggregation due to mutual collision of particles. The particle diameter can be controlled by the below-mentioned emulsification method, and also can be decreased by a mechanical shear force using an emulsifying device such as a high pressure homogenizer.

It is possible to use, as the emulsification method of an oil-in-water type emulsion of the present invention, various emulsification methods known in the prior art, such as a phase inversion emulsification method, a D phase emulsification method, a PIT emulsification method, and a mechanical emulsification method. In the phase inversion emulsification method, the oil-in-water type emulsion of the present invention is produced by the following steps:
(a) the step of stirring an oil-based solution component containing a dye as a colorant in an organic solvent to dissolve a solid component;
(b) the step of adding an emulsifier to an aqueous phase component, followed by stirring to dissolve the emulsifier;
(c) the step of adding a pigment and, if necessary, a dispersing agent to the aqueous phase component, and dispersing the pigment;
(d) the step of gradually adding the aqueous phase component obtained in the steps b and c while stirring the oil-based solution obtained in the step a to obtain a water-in-oil type emulsion; and
(e) the step of further adding an aqueous phase component while stirring, followed by phase transfer to obtain an oil-in-water type emulsion.

A conventionally known method in the production of a water-based pigment ink can be employed in the step of preparing an aqueous phase containing a pigment dispersion. The method includes, for example:
(a) the step of stirring a pigment, a dispersing agent, a solvent, and a pH adjustor for 3 hours using a stirrer;
(b) the step of dispersing for 5 hours using a sand mill;
(c) the step of removing coarse particles of the above pigment dispersion using a centrifugal separator; and
(d) the step of diluting the above pigment dispersion and adding other components.

The thus prepared oil-in-water type emulsion and aqueous phase containing a pigment dispersion are mixed with stirring. It is possible to use, in the mixing with stirring, a method in which the respective components are uniformly mixed by a mixing stirrer, or a method in which the respective components are mixed with dispersing using a disperser such as a ball mill, a beads mill, a roll mill, a homomixer, a disper, an ultrasonic disperser, or a high pressure homogenizer. At this time, an oil phase component and an aqueous phase component may be simultaneously mixed with stirring or dispersing, and the respective components may be sequentially mixed with stirring or dispersing.

While the aqueous phase containing a pigment dispersion was exemplified, a colorant contained in the aqueous phase is not limited to a pigment, and the aqueous phase may contain no colorant and the colorant may be blended only in the oil phase.

While a pigment dispersion prepared in advance may be used as an aqueous phase component in the case of producing an oil-in-water type emulsion, it is preferred that the oil-in-water type emulsion production step and the pigment dispersion step are separately performed since an adverse influence would be exerted on a pigment dispersion system in the case of phase transfer by phase inversion emulsification.

The viscosity of the ink composition of the present invention for a water-based ballpoint pen is preferably from 1 to 100 mPa·s, and more preferably from 5 to 50 mPa·s, in terms of a viscosity at 25°C and a shear rate of 380/second. The viscosity of 100 mPa·s or more is not preferred since ink followability in an ink refill may deteriorate as a result of an increase in viscosity of the ink.

### EXAMPLE 1

Preferred aspects and excellent effects thereof of the present invention will be specifically described below by way of most typical Examples. In the following Examples, all parts are by mass and all percentages are by mass.

In Examples 1 to 20, ink compositions were prepared by changing a fatty acid and a solvent to be mixed, respectively. First, oil phase components shown in Table 1 were warmed to a temperature of 50°C to 60°C while stirring to obtain oil-based solutions containing these components dissolved completely therein. The values in Table 1 are values (% by mass) of the respective components assuming that the total amount of the oil-based solution is regarded as 100%.

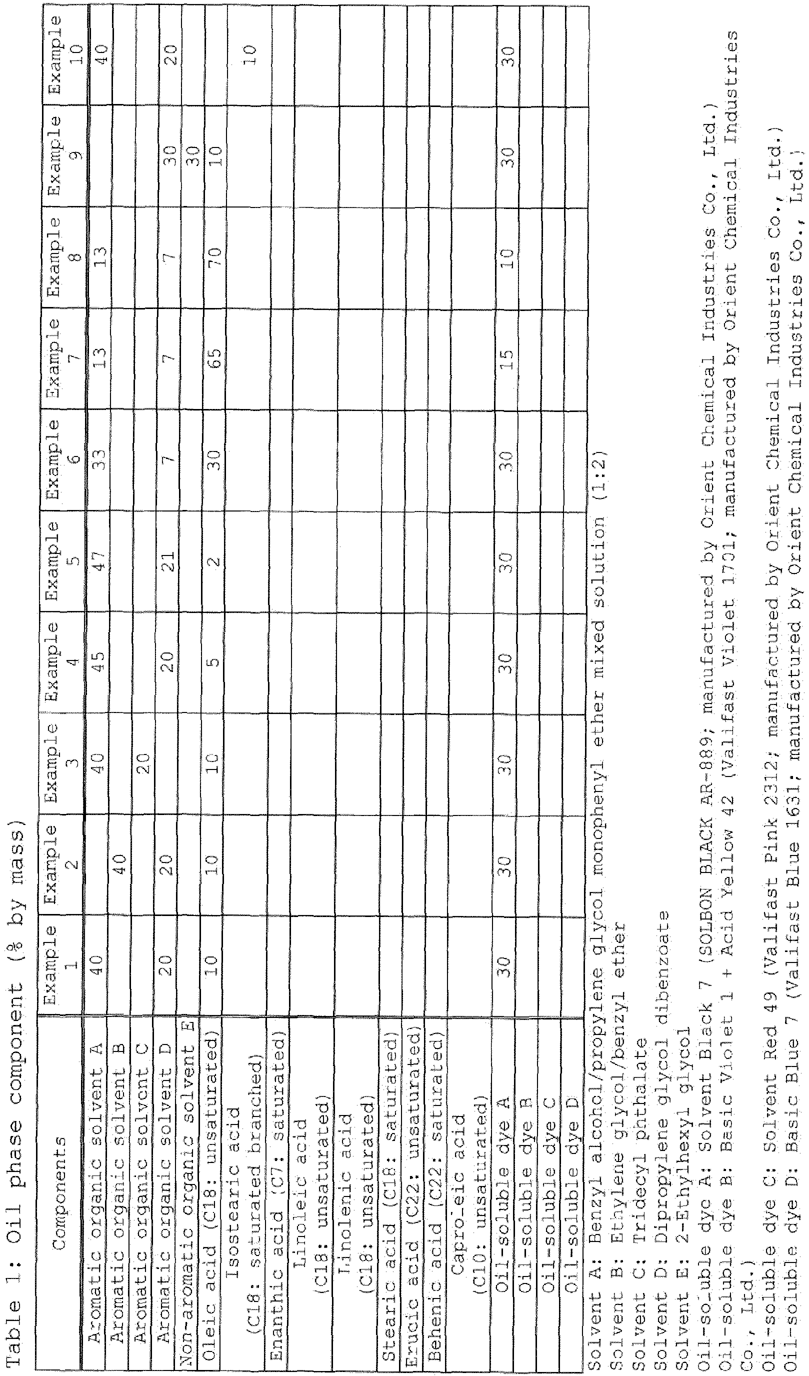

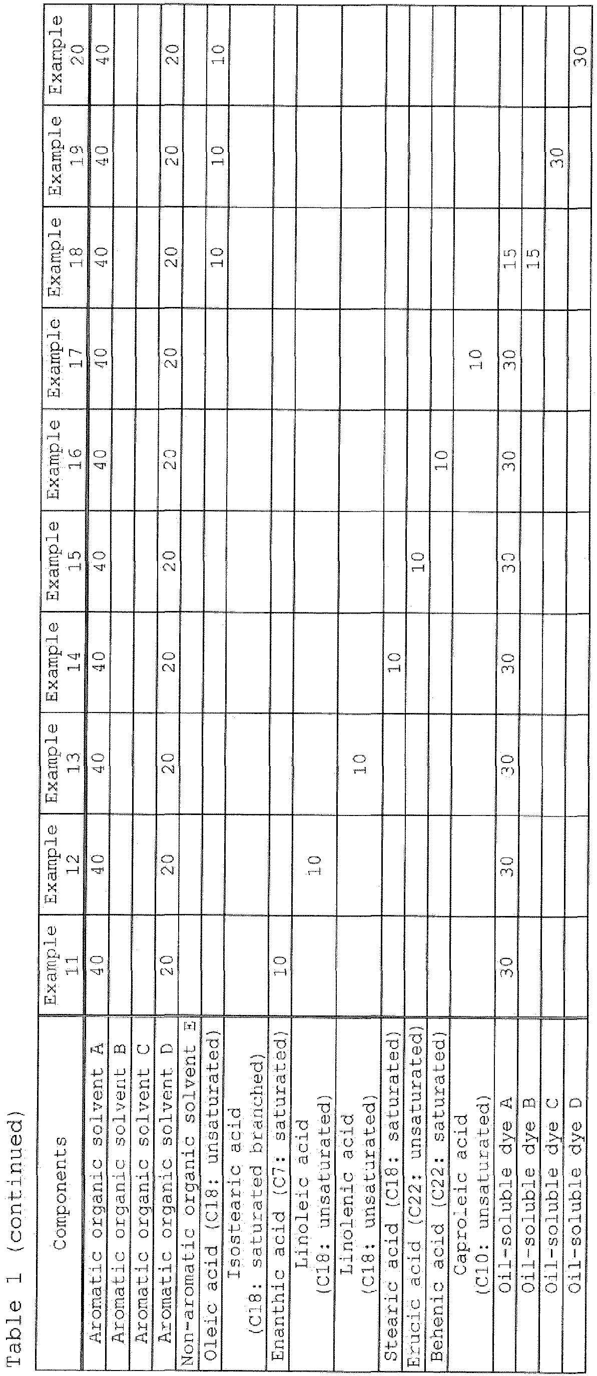

Separately, a surfactant was dissolved in purified water to prepare an emulsifier solution. Then, the emulsifier solution was gradually added to the oil-based solution while stirring thereby causing phase inversion from a water-in-oil type (w/o) emulsion to an oil-in-water type (o/w) emulsion, thus obtaining an oil-in-water type emulsion.

Thereafter, while stirring, a pigment dispersion comprising a pigment A, a dispersing agent, propylene glycol and water was added to the oil-in-water type emulsion, followed by the addition of an additive component comprising a lubricant, triethanolamine and water to obtain an ink composition of the present invention. The emulsifier solution, the pigment dispersion component and the additive component used are shown in detail in Table 2. The ink composition was prepared at a mixing ratio of the oil phase component to the aqueous phase component "oil phase component:aqueous phase component = 10:90 (the oil phase component accounts for 10% of the ink)".

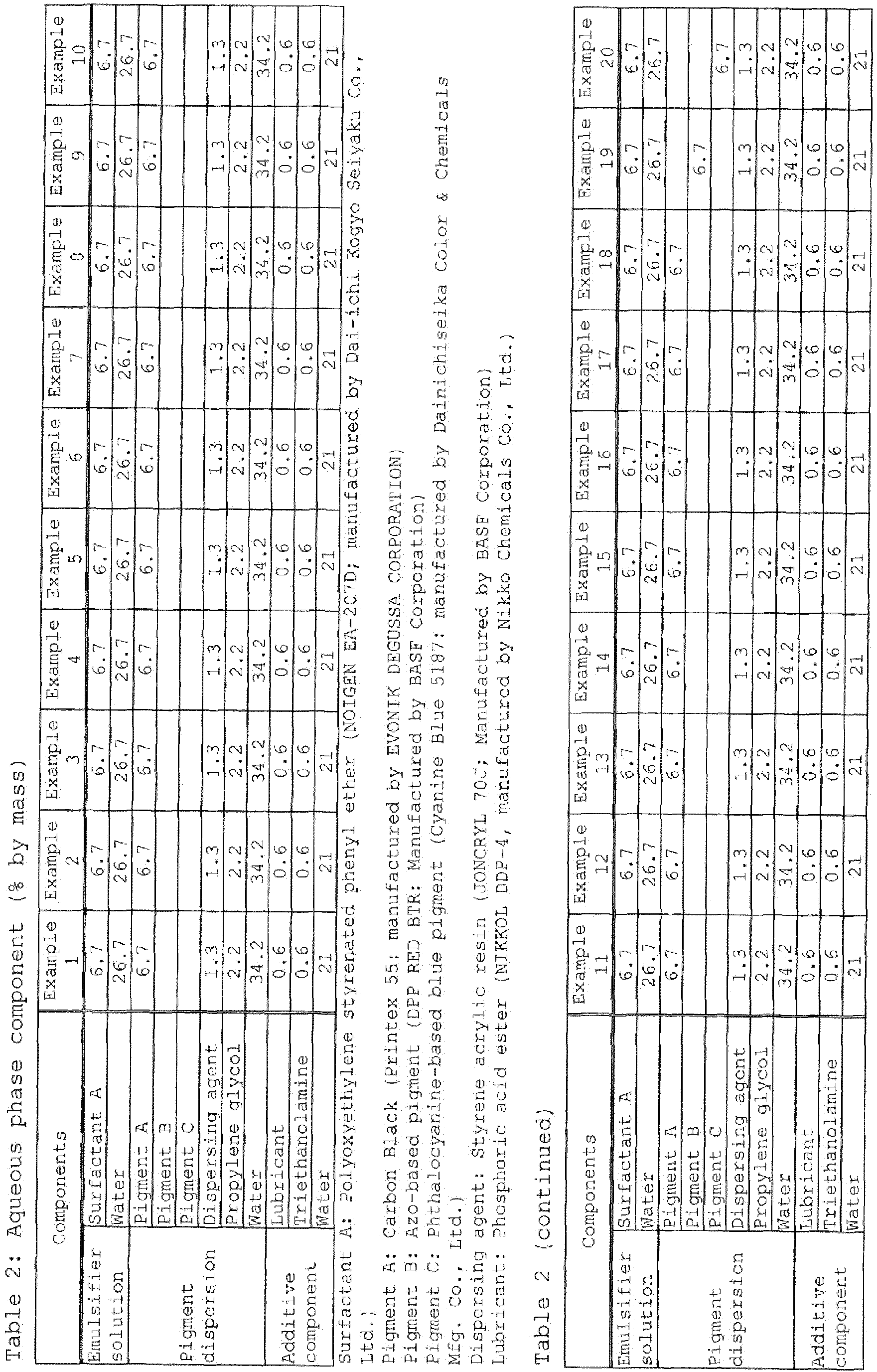

Using the respective ink compositions and ink followers obtained in Examples 1 to 20, water-based ballpoint pens were produced. Specifically, using an axis of a ballpoint pen [manufactured by MITSUBISHI PENCIL CO., LTD. under the trade name of Signo UM-100], a refill comprising a ink-containing tube made of polypropylene, having an inner diameter of 3.8 mm and a length of 113 mm, a tip made of stainless steel (cemented carbide ball having a ball diameter of 0.38 mm) and a joint connecting the ink-containing tube to the tip was filled with the above ink composition, and an ink follower was applied at the rear end of the ink to produce a ballpoint pen, and then the following evaluation test was performed.

An oil phase component shown in Table 3 and an aqueous phase component shown in Table 4 were prepared as Comparative Examples 1 to 3 and then an ink composition was obtained by the same operation as in the above respective Examples. Comparative Example 1 is identical to Example 1, except that oleic acid (C18: unsaturated) used in Example 1 was changed to oleyl alcohol. Comparative Example 2 is identical to Example 1, except that oleic acid (C18: unsaturated) used in Example 1 was changed to valeric acid (C5: saturated). Comparative Example 3 is identical to Example 1, except that oleic acid (C18: unsaturated) used in Example 1 was changed to cis-15-tetracosenic acid (C24: unsaturated). In the same manner as in Examples, a ballpoint pen was produced and the following evaluation test was performed.

**Table 3: Oil phase component (% by mass)**

| Components | Comparative Example 1 | Comparative Example 2 | Comparative Example 3 |
|---|---|---|---|
| Aromatic organic solvent A | 40 | 40 | 40 |
| Aromatic organic solvent D | 20 | 20 | 20 |
| Oleyl alcohol | 10 | | |
| Valeric acid (C5: saturated) | | 10 | |
| cis-15-tetracosenic acid (C24: unsaturated) | | | 10 |
| Oil-soluble dye A | 30 | 30 | 30 |

**Table 4: Aqueous phase component (% by mass)**

| Components | | Comparative Example 1 | Comparative Example 2 | Comparative Example 3 |
|---|---|---|---|---|
| Emulsifier solution | Surfactant A | 6.7 | 6.7 | 6.7 |
| | Water | 26.7 | 26.7 | 26.7 |
| Pigment dispersion | Pigment A | 6.7 | 6.7 | 6.7 |
| | Dispersing agent | 1.3 | 1.3 | 1.3 |
| | Propylene glycol | 2.2 | 2.2 | 2.2 |
| | Water | 34.2 | 34.2 | 34.2 |
| Additive component | Lubricant | 0.6 | 0.6 | 0.6 |
| | Triethanolamine | 0.6 | 0.6 | 0.6 |
| | Water | 21 | 21 | 21 |

### <Evaluation>

### (a) Ink Viscosity

In the measurement of a viscosity of an ink, a rheometer RheoStress 600 manufactured by HAAKE Manufacturing Company, Inc. was used. A cone having a diameter of 20 mm and an inclination angle of 1 degree was used. The measurement was performed under the conditions at 25°C and a shear rate of 380/second for 30 seconds, and the obtained stable numerical value was employed as the viscosity.

### (b) Starving Test

Using each pen body, spiral writing of 5 circles was performed by free hand on a writing paper compliant with ISO standard, and then the degree of starving of a drawn line was visually evaluated by the following criteria.
A: No starving occurred after performing spiral (diameter of about 20 mm) writing of 20 circles.
B: Starving occurred in 5 to 10 circles after performing spiral (diameter of about 20 mm) writing of 20 circles.
C: Starving occurred in 10 or more circles after performing spiral (diameter of about 20 mm) writing of 20 circles.

### (c) Writing Stability (Final Writing Performance) Test

Using an automatic writing testing machine compliant with ISO Standard 14145-1, a test was performed under the conditions of a writing speed of 4.5 m/minute, a writing angle of 90° and a writing load of 1.96 N, and then the state of a drawn line and the amount of an ink consumed were evaluated by the following criteria.
A: Ink was fully consumed without causing any starving.
B: Ink was fully consumed without causing starving.
C: Ink was fully consumed, although starving sometimes occurs.
D: Impossible to write.

### (c) Storage Stability Test

A pen body was left to stand under the condition of 50°C for a month, and then writing performance thereof was confirmed.
A: There is no change from an initial state.
B: Although slight deterioration of a draw line is observed, it is possible to write.
C: A drawn line drastically deteriorates.

The above test results are shown in Table 5 and Table 6. The ink composition using oleyl alcohol of Comparative Example 1 is inferior in writing stability. The ink composition of Comparative Example 2 causes remarkable starving, although the effect is exerted on writing stability. This reason is considered that an emulsion partially aggregates because of unstable emulsion. The ink composition of Comparative Example 3 causes remarkable starving and is also inferior in writing stability. As is apparent from these results, ink compositions of the present invention exhibit excellent results as compared with inks of Comparative Examples.

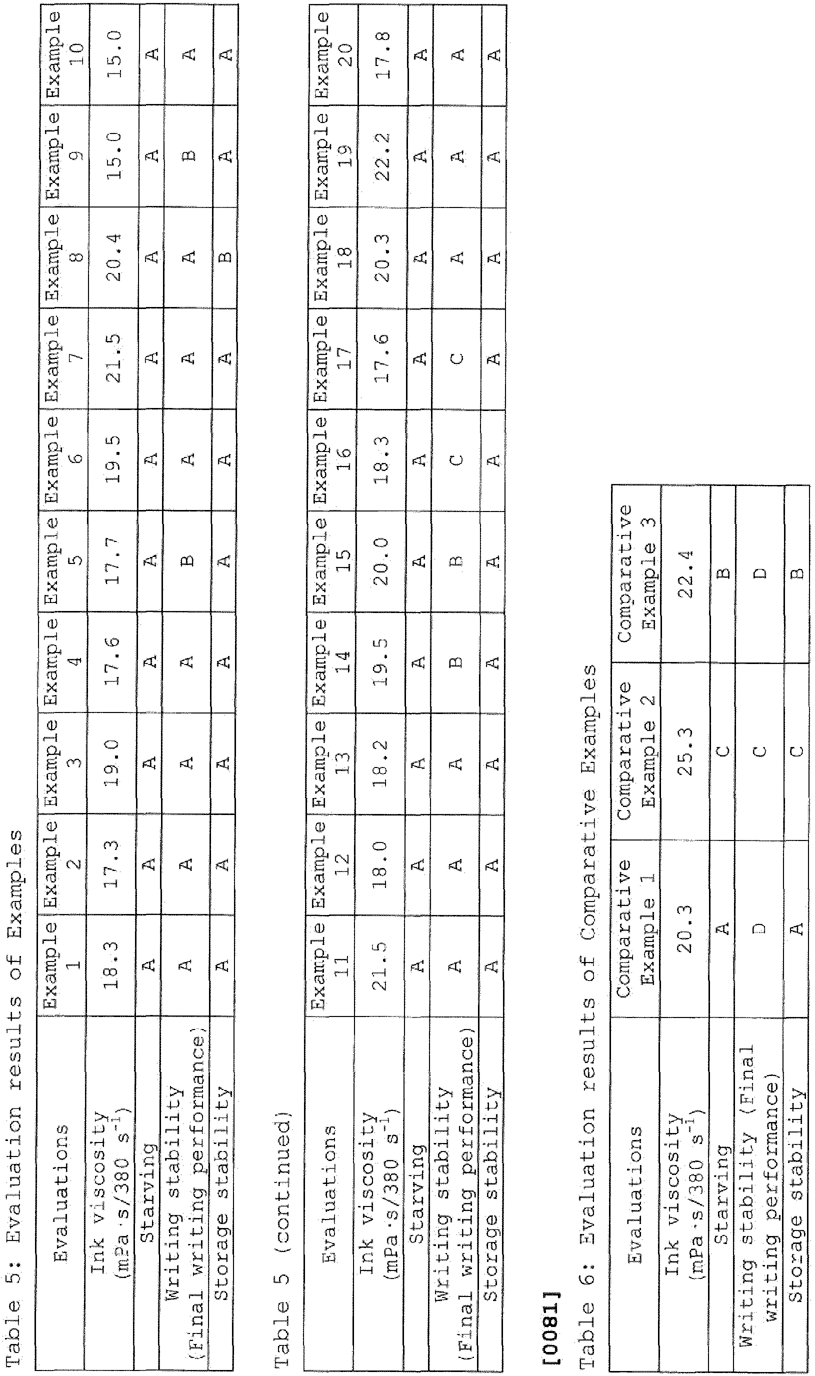

## Claims

1. An ink composition for a water-based ballpoint pen, comprising an aqueous phase, and an oil phase contained in the aqueous phase in a state of an oil-in-water type emulsion, wherein
the oil phase, or the oil phase and the aqueous phase contains a colorant, and
the oil phase contains, in components composing the oil phase, a fatty acid having 6 to 22 carbon atoms.

2. The ink composition for a water-based ballpoint pen according to claim 1, wherein the fatty acid has a melting point of lower than 30°C.

3. The ink composition for a water-based ballpoint pen according to claim 1 or 2, wherein the oil phase contains at least an organic solvent having one or more aromatic rings in the molecular structure.

4. The ink composition for a water-based ballpoint pen according to any one of claims 1 to 3, further comprising an emulsifier having one or more aromatic rings in the molecular structure.
